Europäisches Patentamt

European Patent Office

Office européen des brevets

(11) Veröffentlichungsnummer: **0 315 742**
**A2**

(12) **EUROPÄISCHE PATENTANMELDUNG**

(21) Anmeldenummer: **88113653.5**

(22) Anmeldetag: **23.08.88**

(51) Int. Cl.⁴: **G02B 27/00**

(30) Priorität: **07.11.87 DE 3737972**

(43) Veröffentlichungstag der Anmeldung:
**17.05.89 Patentblatt 89/20**

(84) Benannte Vertragsstaaten:
**CH DE FR GB LI**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Freisleben, Horst, Dr.**
**Nockherweg 19**
**D-8019 Grafing(DE)**
Erfinder: **Scharfenberg, Gottfried, Dr.**
**Buchenstrasse 18**
**D-8011 Siegertsbrunn(DE)**
Erfinder: **Sepp, Gunther, Dr.**
**Hermann-Löns-Strasse 10**
**D-8012 Ottobrunn(DE)**
Erfinder: **Benedikter, Richard, Dr.**
**Hermann-Oberth-Strasse 4**
**D-8011 Putzbrunn(DE)**
Erfinder: **Schnäbele, Werner**
**Stobäusstrasse 5**
**D-8190 Wolfratshausen(DE)**

(54) **Helm-Lagedarstellungsgerät.**

(57) Die Erfindung bezieht sich auf ein Helm-Lagedarstellungsgerät zur Überlagerung subjektiver computergenerierter Zeichen und Symbole auf reellem Landkartenhintergrund mittels eines Projektionsgerätes an einem Helm oder Stirnband eines Operateurs. Durch die genauen Vermessungen des Helmes im Raum und entsprechende Bildverarbeitung werden die Zeichen unabhängig von den Bewegungen des Operateurs richtig auf der Landkarte gesehen, womit z. B. eine taktische Lagedarstellung für militärische Führungssysteme erhalten wird. Ein Ausführungsbeispiel ist erläutert und in den Figuren der Zeichnung skizziert.

FIG. 5

## Helm-Lagedarstellungsgerät

Die Erfindung bezieht sich auf ein Lagedarstellungsgerät zur Überlagerung von Zeichen, Linien und Symbolen gemäß dem Gattungsbegriff des Anspruchs 1.

Solche Lagedarstellungsgeräte - kurz LDG genannt - sind in verschiedenen Ausführungsformen bekannt. Alle diese Geräte sind jedoch mit zum Teil sogar sehr großen Problemen behaftet, so beispielsweise durch die hohe Informationsdichte einer taktischen Karte, die bisher eine kartografische Darstellung mit hoher Detailauflösung nicht ermöglichen.

Durch die DE-OS 34 26 505 ist eine helmmontierte Visiereinrichtung relativ zu einem vorgegebenen Bezugsfeld bzw. -bild bekanntgeworden. Hier wird das Visiersymbol auf einer am Helm montierten Kathodenstrahlröhre erzeugt und über einen halbdurchlässigen Spiegel in Referenz zum Hintergrund ins Auge eingeblendet. Dieses Referenzsystem ist kreiselstabilisiert und befindet sich am Helm.

Aber auch hier ist eine Beschränkung auf zu kleine Bildausschnitte gegeben, nämlich nur maximal auf 40 x 40 cm, während ein Bildausschnitt von mindestens 100 x 100 cm gefordert ist. Aber auch das Gerätevolumen und das relativ hohe Gewicht sind als Nachteile der bisher vorgeschlagenen Ausführungsformen anzuführen.

Der vorliegenden Erfindung liegt die Aufgabe zugrunde, ein Lagedarstellungsgerät zu schaffen, das eine Kombination von konventioneller Kartendarstellung mit der Überlagerung zusätzlicher Informationen in Form von Zeichen und Symbolen erlaubt, wobei diese Überlagerung noch für jeden einzelnen Betrachter individuell steuerbar ist, in dem Sinne, daß verschiedene Beobachter eigene individuell für sie bestimmte Informationen dargeboten bekommen. Das heißt, verschiedene Operateure können verschiedene Informationen gleichzeitig auf die Karte projizieren und jeder sieht nur sein Bild, während ein Hauptoperateur beliebig alle Informationen sehen kann.

Diese Aufgabe wird durch die im Anspruch 1 aufgeführten Maßnahmen gelöst. In den Unteransprüchen sind Ausgestaltungen und Weiterbildungen angegeben, in der nachfolgenden Beschreibung ist ein Ausführungsbeispiel erläutert und in den Figuren der Zeichnung skizziert. Es zeigen:

Fig. 1 ein Schemabild einer Lagedarstellung mit Symboleinblendung und Symbolsteuerung,

Fig. 2 ein Schemabild einer Lagedarstellung mit Bestimmung von Position und Blickrichtung,

Fig. 3 ein Blockschaltbild der Anordnung zur Bestimmung von Betrachterposition und Orientierung,

Fig. 4 ein Schemabild bezüglich des Strahlenganges der optischen Abbildung zur Lagedarstellung,

Fig. 5 ein Blockschaltbild der Gesamtanordnung eines Lagedarstellungsgerätes,

Fig. 6 ein Schemabild eines Operateurs mit der auf einem Helm montierten monokularen Sichteinrichtung.

Die Kombination einer fein aufgelösten kartografischen Darstellung mit einer beliebig steuerbaren Überlagerung veränderbarer Informationssymbole für den einzelnen Betrachter läßt sich bei vergleichsweise einfachem technischen Aufwand dadurch erreichen, daß eine normale Wandkarte in der Größe von 1m x 1m und im Maßstab von 1 : 50 000 bis 1 : 500 000 benützt wird und der oder die Betrachter eine kleine Apparatur erhalten, durch welche für sie sichtbare, elektronisch erzeugte Symbole generiert werden. Diese Symbole werden derart in das Gesichtsfeld eingebracht, daß sie für das Auge des Beobachters unter allen auftretenden Betrachtungssituationen als virtuelle Bilder an der jeweils ausgewählten Stelle der Karte erscheinen.

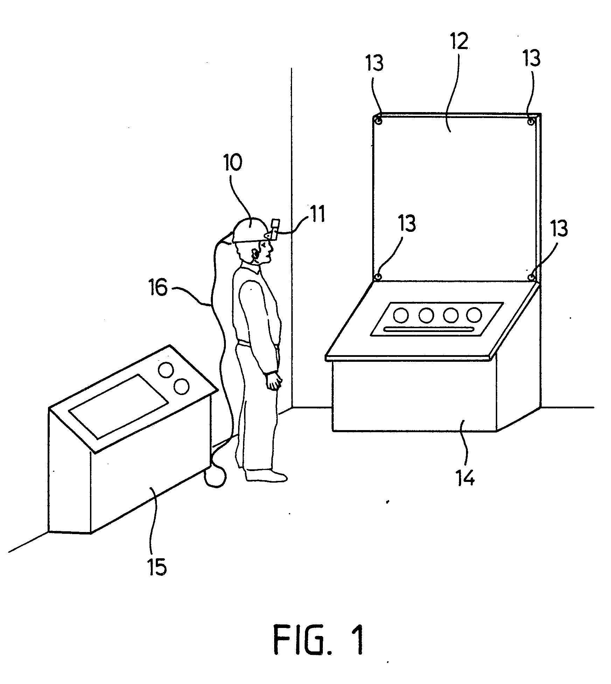

Die Figur 1 verdeutlicht den Aufbau und die Zusammensetzung so einer Gesamtanordnung in einem Ausführungsbeispiel, das nachfolgend in den wesentlichen Einzelheiten beschrieben wird. An einer Wand, einer Platte oder einem Rahmen ist eine Landkarte 12 in der Größe von 1m x 1m befestigt. An den vier Ecken der Kartenfläche sind je eine Markierungslichtquelle 13 als Fixpunkte zur geometrischen Ortsbestimmung und Orientierungsbestimmung des oder der Betrachter angeordnet. Dieser Anordnung ist nun ein Rechner 14 mit Bedienungseinrichtung zugeordnet.

Der oder die Betrachter bzw. Operateure sind mit einem Helm oder Stirnband 10 ausgerüstet an dem ein Betrachtungsgerät 11 montiert ist. Dieses Gerät erlaubt dem Betrachter einmal den freien Blick auf die Karte und zum andernmal ein in gewissen Grenzen von seiner Position und der Orientierung seiner Blickrichtung unabhängiges Überlagern bildlicher Darstellungen auf der Karte. Diese eingeblendeten Darstellungen sind weitgehend größenrichtig und verzerrungsfrei am gewünschten oder vorgegebenen Ort der Karte. Nachfolgend wird hierzu noch näher eingegangen. Zu erwähnen wäre hier noch, daß das Betrachtungsgerät so ausgeführt ist, daß der Betrachter weder durch das Gewicht des Gerätes noch durch dessen Trägheitsmoment über Gebühr beansprucht wird.

Das hier beschriebene Ausführungsbeispiel eines Lagedarstellungsgerätes setzt sich also aus zwei Hauptkomponenten zusammen, nämlich der ortsfesten, raumgebundenen Einrichtung und dem vom jeweiligen Betrachter getragenen Gerät. Hierbei lassen sich die Nahtstellen zwischen den ortsfesten und den beweglichen Teilen in Abhängigkeit von den vorhandenen Parametern in gewissen Grenzen frei definieren. Zu der ortsfesten Einrichtung gehören neben den Elementen zur Steuerung der eingeblendeten Informationen ( Pult für die Symbolfernsteuerung 15 ) hauptsächlich das Lage- und Richtungssystem ( Rechnerpult mit Bedienung 14 ). Letzteres setzt sich aus der bereits angesprochenen Landkarte 12 und aus mehreren - vorzugsweise vier - orthogonal zueinander auf der Kartenwand - beispielsweise an den Kartenecken - angeordneten Lichtquellen 13 zusammen, welche Lumineszenzdioden sein können. Für eine Ortsbestimmung würden drei nicht in einer Linie angeordnete Lichtquelle als Referenzpunkte ausreichen, jedoch ist der rechnerische Aufwand bei Verwendung von vier Lichtquellen erheblich geringer, was bei der erforderlichen Echtzeitrechnung nur vorteilhaft ist.

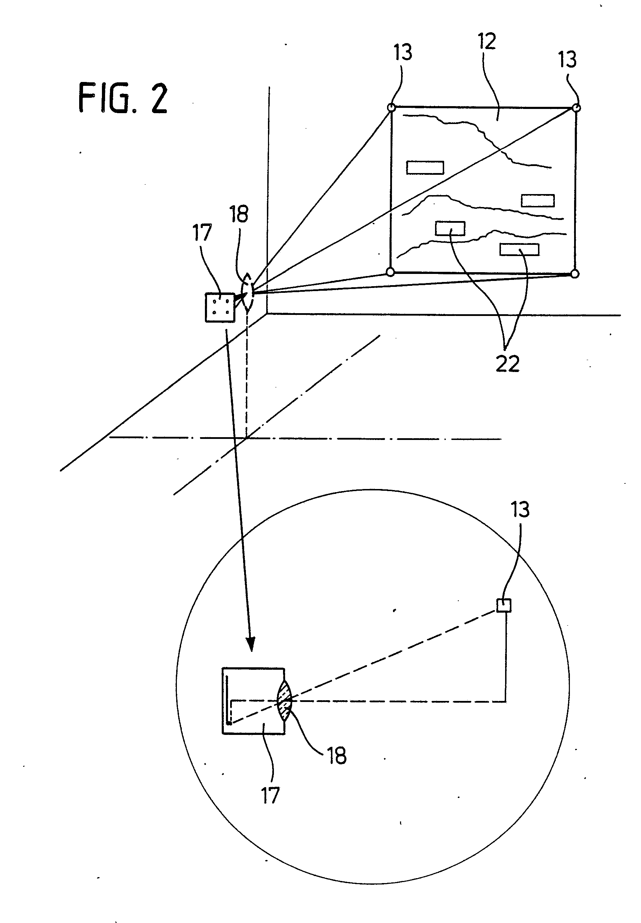

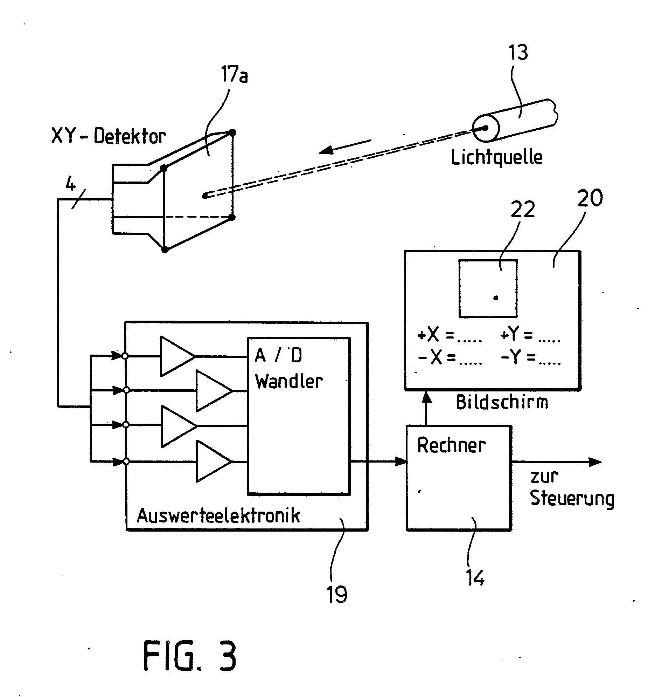

An den Helmen 10 der Betrachter befindet sich das kleine Betrachtungsgerät 11, das als Sensor für die Ausrichtung eine positionsempfindliche Diode 17 in Flächenausführung hinter einem Objectiv 18 - wie in Fig. 2 und 3 veranschaulicht - verwendet. Das Objektiv weist eine den gegebenen Verhältnissen entsprechende Brennweite auf. Objektiv 18 und positionsempfindliche Diode (PSD) 17 sind einer Kamera zugeordnet. Die an den Kanten der Positionsdiode 17, 17a angebrachten Elektroden wirken wie ein Stromteiler und geben die Position des Lichtfleckes 22 in zwei orthogonalen Richtungen als analoge elektrische Werte wieder. Durch die Verwendung eines Multiplexverfahrens läßt sich so die Winkellage des am Helm 10 angebrachten Sensors in bezug auf alle Markierungs-Lichtquellen 13 simultan oder in ausreichend schneller Folge nacheinander bestimmen. Aus diesen Werten werden in dem Rechner 14 in Echtzeit die Projektionsrichtung für die eingespiegelten Signale und die Entfernung zur Karte 12 errechnet.

In der Figur 3 ist die Anordnung und Schaltung einer positionsempfindlichen Diode in Flächenausführung 17a mit nachgeschalteten Verstärkern und Analog-Digital-Wandlern in einer Auswertelektronik 19 schematisch dargestellt. Das Überlagern der Symbole 22 in das Gesichtsfeld des Betrachters geschieht durch den Bildschirm 20 einer kleinen am Helm 10 montierten Kathodenstrahlröhre oder eines anderen Displays unter Zwischenschaltung eines um 45° geneigten halbreflektierenden Spiegels 21 und einer als Lupe 18a in den Strahlengang geschalteten Sammellinse, die ein auf der Kartenebene 12a erscheinendes virtuelles Bild des Monitor-Schirmes 20 erzeugt.

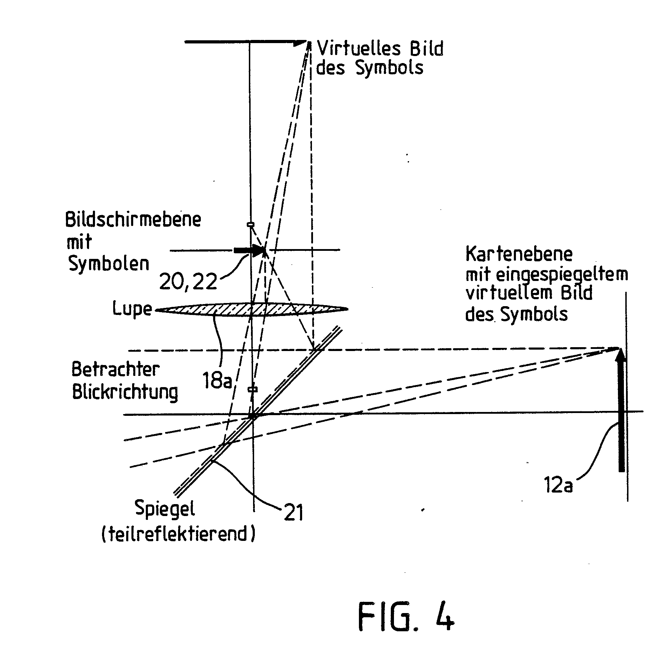

Die Figur 4 skizziert den Strahlengang der vorbeschriebenen optischen Abbildung, wobei zur besseren Übersicht ein geringer Vergrößerungsmaßstab gewählt wurde. Die Lage der Symbole 22 auf dem Monitorschirm 20 wird durch den Rechner der Symbolfernsteuerung 15 so gesteuert, daß der Ort der virtuellen Bilder auf der Kartenebene 12a unabhängig von der Kopfbewegung des Betrachters und von dessen Lage im Raum immer an der gewünschten Stelle zu sehen ist.

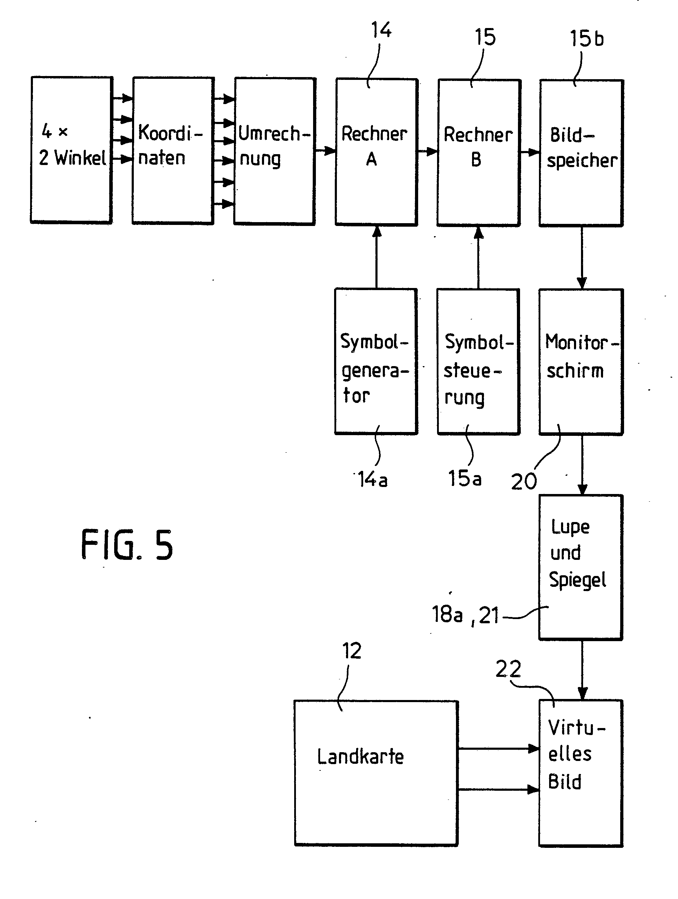

In der Figur 5 ist ein Blockdiagramm der Gesamtanordnung dargestellt, aus dem sich die gesamte Wirkungsweise der technischen Gerätschaft erkennen läßt, so daß sich weitere Ausführungen erübrigen dürften. Zur Vermessung der Stellung der bzw. des Betrachters ist es weiterhin möglich, dessen Entfernung von den Referenzpunkten 13 auf der Kartenebene 12a laufend mittels eines Entfernungsmessers zu bestimmen. Dieser kann sowohl auf dem Helm 10 als auch an der Kartenebene - vorzugsweise an einem der Referenzpunkte 13 - angeordnet sein. Dabei müssen jedoch auf in diesem speziellen Fall Mittel zur Bestimmung der Orientierung des Helmes 10 in allen drei Achsen vorgesehen werden.

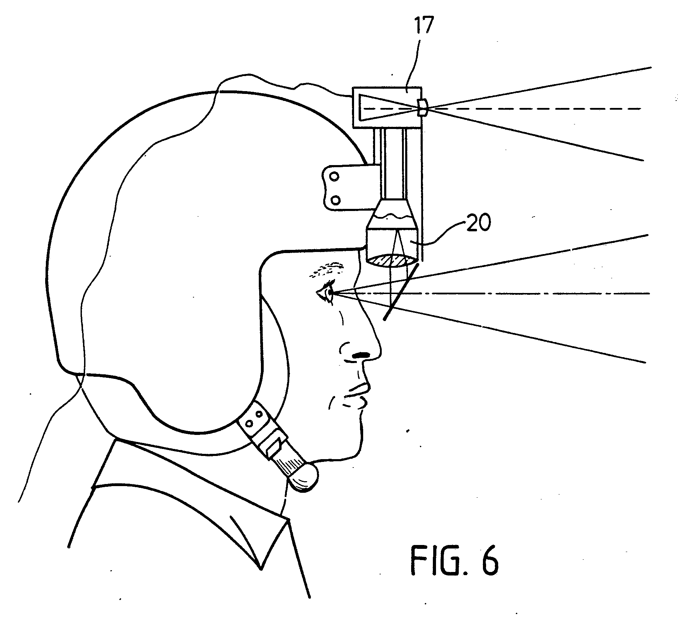

Die Figur 6 zeigt ein Schemabild eines Operateurs bzw. Betrachters, der mit dem Lagedarstellungsgerät LDG arbeitet. An seinem Kopf trägt er die monokulare Sichteinrichtung, die - wie bereits erwähnt - aus dem Monitorbildschirm 20, einer Lupe und einem geneigten halbreflektierenden Spiegel zur Bildbetrachtung sowie einem kameraartigen Mehrfach-Winkelsensor mit Objektiv und Positionsdiode 17 besteht.

Um eine Betrachtung der Karte 12 aus verschiedenen Stellungen und unter verschiedenen Winkeln zu ermöglichen, sollte die ausleuchtbare Fläche des Monitors 20 so groß sein, das das erzeugte virtuelle Bild 22 eine Kantenlänge vom eineinhalbfachen bis zweifachen der Kartenabmessungen bei der nächsten Betrachtungsentfernung einnimmt. Auf diesem virtuellen Bild wird die Lage der Symbole 22 und sonstigen Darstellungen durch den Rechner 15 so gesteuert, daß diese für den Betrachter an der gewünschten oder erforderlichen Stelle der Landkarte 12 stehen. Es handelt sich also nicht um eine für alle Anwesenden sichtbare Projektion der Symbole 22 auf die Karte, sondern um die individuelle Visualisierung der Symbole für den einzelnen Betrachter, wobei verschiedenen Betrachtern auch verschiedene Darstellungen gegeben werden können.

**Ansprüche**

1. Lagedarstellungsgerät zur Überlagerung von Zeichen, Linien und Symbolen auf einem reellen Landkartenhintergrund mittels eines an einem Helm angeordneten Projektionsgerätes, **dadurch gekennzeichnet,** daß mindestens drei nicht in einer Linie, vorzugsweise vier orthogonal zueinander angeordnete Markierungs-Lichtquellen, beispielsweise Lumineszenzdioden (13) auf der ortsfesten Landkarte (12) angeordnet sind und am Kopf des Betrachters - beispielsweise an einem Helm oder Stirnband (10) - als Sensor (11) für die Ausrichtung eine positionsempfindliche Diode (17) in Flächenausführung hinter einem Objektiv (18) bestimmter Brennweite angeordnet ist, wobei an den Kanten der Positionsdiode (17) Elektroden als Stromteiler fungieren, die die Position des Lichtfleckes in zwei orthogonalen Richtungen als analoge elektrische Werte wiedergeben und sich daraus mittels eines Multiplexverfahrens die Winkellage des Sensors (11) am Helm (10) in bezug auf die Markierungs-Lichtquellen (13) wertmäßig ergibt, woraus mit einem Rechner (14) in Echtzeit die Projektionsrichtung für die eingespiegelten Symbole (22) und die Entfernung zur Karte (12) ermittelt wird, und die Überlagerung dieser Symbole (22) für mehrere Betrachter individuell von einer Symbolfernsteuereinrichtung (15) steuerbar ist.

2. Lagedarstellungsgerät nach Anspruch 1, **dadurch gekennzeichnet,** daß zur Überlagerung der Symbole (22) in das Betrachter-Gesichtsfeld am Helm (10) ein Display (17a) unter Zwischenschaltung eines geneigten halbreflektierenden Spiegels (21) und eines Objecktivs (18a) angeordnet ist, wobei letzteres in der Kartenebene (12a) ein virtuell erscheinendes Bild des Monitor-Schirmes (20) erzeugt.

3. Lagedarstellungsgerät nach Anspruch 1 oder 2, **dadurch gekennzeichnet,** daß die Lage der Symbole (22) auf dem Monitor-Schirm (20) so vom Rechner (Symbolfernsteuerung 15) gesteuert wird, daß der Ort des virtuellen Bildes auf der Kartenwand bzw. in der Kartenebene (12a) unabhängig von den Kopfbewegungen des Betrachters und von dessen Lage im Raum stets an der gewünschten Stelle sichtbar ist.

4. Lagedarstellungsgerät nach den Ansprüchen 1 bis 3, **dadurch gekennzeichnet,** daß die Entfernung des Betrachters von der Kartenebene (12a) bzw. deren Referenzpunkte (Markierungslichtquellen 13) durch den Rechner (14) laufend aufgrund der Meßwerte eines Entfernungsmessers am Helm (10) oder an der Kartenwand (12) bestimmt wird und Mittel zur Orientierung des Helmes in allen drei Achsen vorgesehen sind.

5. Lagedarstellungsgerät nach den Ansprüchen 1 bis 4, **dadurch gekennzeichnet,** daß der Sensor (11) am Helm (10) als monokulare Sichteinrichtung ausgebildet ist und aus einem Monitor-Bildschirm (20), einer Lupe (18a) und einem geneigten halbreflektierenden Spiegel (21) sowie einem kameraartigen Mehrfach-Winkelsensor mit Objektiv und Positionsdiode zusammengesetzt ist.

6. Lagedarstellungsgerät nach einem oder mehreren der ansprüche 1 bis 5, **dadurch gekennzeichnet,** daß der Sensor (11) am Helm (10) über ein flexibles Kabel (16) mit der Einrichtung zur Symbolfernsteuerung (15) verbunden ist.

FIG. 1

10 384

FIG. 2

10 384

**FIG. 3**

10 384

Virtuelles Bild
des Symbols

Bildschirmebene
mit
Symbolen

20,22

Lupe

Kartenebene
mit eingespiegeltem
virtuellem Bild
des Symbols

Betrachter
Blickrichtung

18a

12a

Spiegel
(teilreflektierend)

21

FIG. 4

10 384

FIG. 5

FIG. 6

10 384